# EUROPEAN PATENT APPLICATION

(11) **EP 1 629 939 A1**
(43) Date of publication of application: **01.03.2006**
(21) Application number: 04405524.2
(22) Date of filing: 23.08.2004
(51) Int. Cl.: B23Q 1/28

(54) **Brake, particularly for rotating tables**

(71) Applicant: Peter Lehmann AG, 3552 Bärau (CH)
(72) Inventor: Steinmann, Martin, 3550 Langnau (CH); Meyer, Walter, 3613 Steffisburg (CH)
(74) Representative: AMMANN PATENTANWÄLTE AG BERN

(57) **Abstract**

A brake device (50) for frequently braking a moving part, particularly a shaft of a rotating table of a tool machine, comprises a pretensioned ring-shaped spring plate element (11, 55). On the front and rear sides, each a sealing plate (57, 58) is arranged. In cooperation with seals (60, 61, 63, 64) and the surrounding housing (68), two chambers (7, 31) are defined on both sides of the spring element (11, 55). By increasing pressure in the chamber (7) on the concave side of the spring element (11, 55), the spring element may be subjected to a deforming force being equal or exceeding its tension so that its action on the brake sheet (22) is compensated, hence the brake is loosened. In contrast, pressure in the other chamber (31) supports the spring's action, hence the brake's effect.

## Description

The present invention relates to a brake device according to the preamble of claim 1.

In tool machines, more particularly for rotating tables, brakes are needed for braking shafts and spindles. For safety reasons, the brakes are required to be fail-safe, i.e. in case of power loss, the brakes have to engage with the moving member.

The WO-A-01/34990 teaches a fail-safe brake or clamping mechanism, wherein the prominent part is a sheetlike structure which may be flexibly bent. Thereby, the distance between its opposite peripheral borders, i.e. those essentially parallel to the bending axis, is reduced. Vice-versa, by transiting to a less bent condition, the distance is increased. This change is used for actuating the brake parts of the mechanism.

The bending is done by increasing or decreasing pressure in a chamber, of which the sheet-like structure constitutes a wall. In case of power failure, the pressure difference to ambient pressure disappears almost immediately and the sheet-like member relaxes like a spring, whereby the brake parts are moved into the breaking or clamping position.

This mechanism has proven to perform well in applications where it is seldom activated, e.g. once a working day or shift for starting and stopping a part which is else continuously in motion.

In machine tools, however, moving or rotating parts, e.g. the shafts of rotating tables, have to be stopped and restarted at short intervals many times a day.

Hence, it is an object of the present invention to propose a brake mechanism having a higher durability measured in terms of braking cycles.

Such a brake is defined in claim 1. The following claims contain preferred embodiments of the brake.

Basically, the brake according to the invention is characterized by a sheet-like, resiliently deformable actuator member. However, the member is in sliding contact with the border of the other walls of the chamber, the sealing is provided in this contact zone on the border of the chamber and a sealing plate is arranged on the sheet-like member, so that a high-quality closure of the chamber is obtained. As the periphery of the actuator member is no more involved in closing the chamber, it can be optimised to the task of actuating the braking member.

The invention will be explained more in detail by way of a preferred exemplary embodiment with reference to the drawing:
- Fig. 1: shows a brake similar to the prior art;
- Fig. 2: shows a cross-section of a brake according to the invention;
- Fig. 3: shows a magnified part of Fig. 2;
- Fig. 4: a further enlarged detail of Fig. 3, and
- Fig. 5: shows a schematical top view on a spring plate.

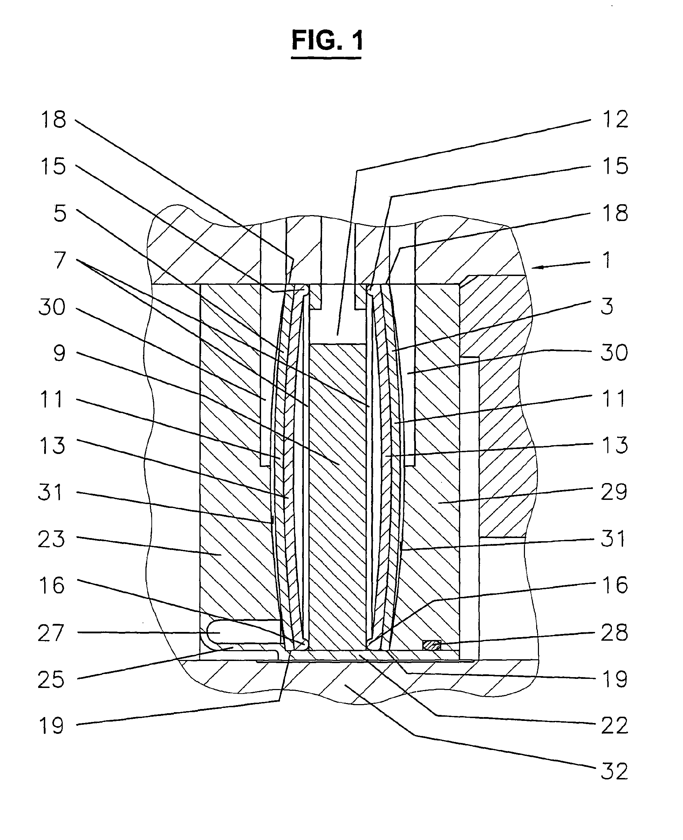

Fig. 1 shows a brake 1 built basically according to, yet improved over WO-A-01/34399 and the ulterior DE-U-203 06 92, which are incorporated into the description by reference. Two actuating members 3, 5 are provided, between which a first chamber 7 exists. The two actuating members 3, 5 are separated by a middle wall 9. The middle wall has a passage 12 with a connecting channel to a source of pressurized air (or a vacuum pump).

Each actuating member 3, 5 consists of a ring-shaped steel spring plate 11 covered on the face adjacent the middle wall 9 with a polymeric layer 13. More particularly, the layer is vulcanized on the spring plates 11. In the border region, the polymeric layer is thickened in order to provide line-shaped sealing elevations 15, 16. The elevations 15, 16 are in sealing contact with the surface of the middle wall 9.

The rims 18, 19 of the actuating members 3, 5 touch the surface of the outer, stationary housing 20 of the machine and the inner surface of the brake sheet 22 or sleeve which is flexibly connected with the outer wall 23 of the chamber 7 by a lamella 25. The lamella 25 is machined by cutting a groove 27 in the peripheral region of the respective outer wall.

Between the circumferential surface of the other outer wall 29 and the adjacent inner surface of the brake sheet 22, an O-ring seal 28 is provided.

In the outer walls 23, 29 are conduits 30 for pressurized air, so that an overpressure can be created in the 2nd chambers 31 between the rear faces of the actuating members 3, 5 and the outer walls 23, 29, too.

The actuating members 3, 5 are mounted in a pretensioned bent state, so that the brake sheet 22 is permanently pressed against the surface of the moving part 32. Hence, the brake is activated just by the spring force of the actuating members 5.

For disengaging the brake, overpressure in the 1st chamber 7 is created. The overpressure exerts a force on the concave face of the actuating members 3, 5, hence outbalancing the spring force or pretension of it.

In contrast, by creating overpressure on the convex side of the actuating members 3, 5, i.e. in 2nd chamber 31, the braking force can be increased. Obviously, by applying instead or additionally underpressure or vacuum each time to the other side of the actuating members 3, 5, these functions can be performed as well respectively supported.

During practical tests, though, with this type of brake used for shafts having diameters 200 mm or less as it is typical in tool machines, particularly for shafts of rotating tables, it was also observed that the service life was insufficient. In particular, the polymeric layer desintegrated from the spring plate to which it was attached by vulcanisation. Additionally, in use, the rims 18, 19 of the spring plates 11 were deformed, and even worse developed an irregular surface with sharp edges and peaks towards the periphery of the sealing polymeric layers. Thereby, the polymeric layers were damaged and the sealing deteriorated.

In other terms, this type of brake did by far not meet the requirement of at least 100'000 breaking cycles without sensible wear.

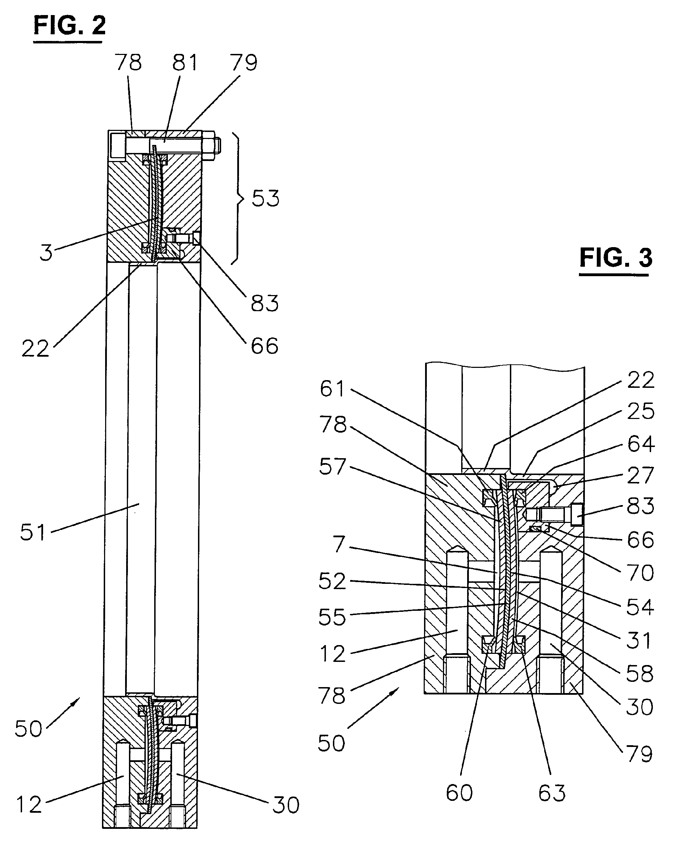

According to the invention, this disadvantage is removed in the brake 50 (Figs. 2, 3) by providing a novel type of seals on the front (concave) 52 and rear (convex) 54 face of the spring plate 55. Fig. 2 shows a section through a brake 50. The brake 50 is ring-shaped with a passage 51 for a (rotating) shaft. Fig. 3 shows a magnified section through the brake ring 53. Elements having the same function as in the brake of claim 1 bear the same reference number.

The seals consist of two parts, namely a sealing plate 57, 58 laying on the respective surface of the spring plate 55, and two lip seals 60, 61 respectively 63, 64 per sealing plate 57, 58. The lip seals are arranged as near as possible to the periphery of the sealing plates 57, 58 so that the area of the sealing plates 57, 58 on which the overpressure acts is maximized. For this purpose, the lip seal 64 near the connecting lamella 25 is held in a seal carrier 66. By this means, the lip seal 64 is located even within the groove 27, hence nearer the periphery of the sealing plate 58 and providing a maximized surface for the effect of overpressure in the 2nd chamber (see below).

The chamber 7 for deactivating the brake is composed by the sealing plate 5, backed up by the spring plate 55, the lip seals 60, 61 and else the housing 68 of the brake, which also contains the conduit 12 for pressurized air to the chamber 7. Analogously, the second chamber 31 is substantially constituted by the other sealing plate 58, lip seals 63, 64, the housing 68 and additionally the mentioned seal carrier 66 sealed against the housing by an O-ring 70. Pressurized air is fed into the chamber 31 through the conduit 30.

In comparison with the brake of Fig. 1, the seal 28 between the brake sheet 22 and the housing of the brake for closing the 2nd chamber is no more needed. This seal had the disadvantage that the sleeve 22 moved away in braking, hence the seal had to expand to remain tight.

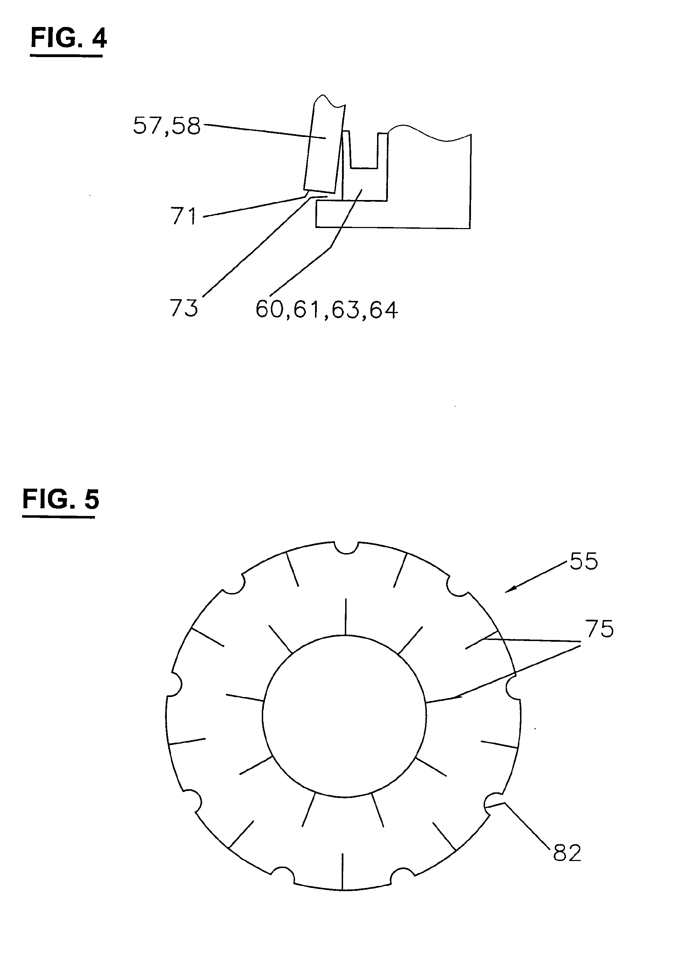

It is to be noted that the sealing plates are not fixedly connected to the spring plate 55 but are freely sliding on it. Between their rim 71 and the surrounding housing 68, a small gap 73 exists (cf. Fig. 4 showing the boundary further zoomed). This gap 73 is large enough to allow to bring the sealing plate into plane condition without being impeded by touching the surrounding housing. Obviously, the gap 73 is also made as small as possible so that the sealing plates have no unnecessary play.

Fig. 5 shows a schematical top view on a spring plate 55. It is shaped as a disk ring and incisions 75 extend from its center line. The incisions serve to adjust the spring characteristics. Generally, the more incisions are present, the smaller is the force needed to bend the spring 55. The incisions may vary in width.

The spring plate 55 consists of the spring steel, the sealing plates of Teflon (DuPont), i.e. polytetrafluoroethylene (PTFE), and the lip seals of a polymeric material having low friction on the material chosen for the sealing plates, yet guaranteeing the needed tightness. Of course, with the layout and orientation shown in the Figures, the lips of the lip seals will be pressed against the respective surfaces by the applied pressure, hence the sealing will be improved with increased pressure in the chamber 7, 31.

The sealing plates 57, 58 are of about the same shape as the spring 55, yet of reduced width to fit in their seats with maintaining the gap and play mentioned above.

Another advantage of the present invention consists in that only one spring plate element is needed to produce the required fail-safe brake force.

Still another advantage is that both engaging and disengaging of the brake may be forced by pressurizing the appropriate chamber, leading inter alia to timely better defined operation cycles.

Finally, regarding the disadvanteages mentioned in respect of the brake according to Fig. 1, no seal means is fixedly attached to the spring 55, peculiarly no polymeric layer is vulcanized on the spring plate 55.

Before assembly, the spring plate and the sealing plates are flat. Only in the course of assembly of the brake device, the spring and the sealing plates are bent, whereby the spring is pretensioned in view of the fail-safe braking function.

Basically, the housing 68 comprises two generally ring-shaped halves 78 and 79 which are held together by bolts 81. Correspondingly, recesses 82 are provided in the outer periphery of the spring plate 55.as passages for the bolts 81 (Fig. 5). The seal carrier 66 is held in the respective housing half 79 by screws 83 (Fig. 3).

The device is primarily intended for use in a tool machine, more preferably as a brake for the shaft of a rotating table.

Having read the above description of the non-limiting embodiment of the inventor, the one skilled in the art is capable to conceive numerous variations and alterations without leaving the scope of the invention which is defined by the claims.

Some of these variations are:
- Selection of other materials for the spring plate (other metals or alloys, in particular), the sealing plates and/or the lip seals (in particular polymer materials in adaptation to the respective needs and requirements.
- Design for other shapes of moving and/or rotating parts.
- More than one spring plate member may be used, e.g. as a stack, in order to increase the spring force and/or to increase the functional safety, e.g. with respect to failure of one spring element.
- For the control of the brake function, pressure sensors may be arranged in the chambers, and be connected to a control unit, e.g. on the basis of PLCs or embedded processors, or the like. The control unit may be further connected to a remote supervising control unit. Such sensors and controllers are however known in the art.

## Claims

1. A brake (50) for producing a frictional engagement between a first, frictional member and a movable part (22), the brake comprising at least one substantially plate-shaped actuating member (55) actuating the frictional member (22), the actuating member being resiliently flexible, so that by altering the distance between opposite peripheries of the actuating member by bending it, the frictional element can be actuated, **characterized in that** a first sealing plate (57) is arranged on a first side of the actuating member and constitutes a wall of a first closed space (7), that the sealing plate is in movable contact with the remaining walls of the space in a contact zone, and that a sealing member (60, 61) is arranged in the contact zone, so that overpressure may be produced in the closed space in order to bend the sealing member and the actuating member for reducing or loosening the frictional engagement.

2. A brake (50) according to claim 1, **characterized in that** the actuating member (55) is bent in order to increase the force exerted on the frictional member (22) and that the first sealing plate (57) is arranged on the concavely bent side of the actuating member.

3. A brake (50) according to one of claims 1 to 2, **characterized in that** a second sealing plate (58) is arranged on the second, convex side of the actuating member when bent and constitutes a wall of a second closed space (31), that the second sealing plate is in movable contact with the remaining walls of the second space in a second contact zone, and that a second sealing member (63, 64) is arranged in the second contact zone in order to provide a tight contact, so that by an overpressure in the second space, the opposite effect of an overpressure in the first space can be created by bending the sealing plate(s) (57, 58) and the actuating member (55) in an antagonistic manner.

4. A brake (50) according to one of claims 1 to 3, **characterized in that** at least one sealing member (60, 61; 63, 64) has at least one essentially line-shaped region of an resilient material which is in slidingly tight contact with the respective sealing plate (57, 58) and/or the wall of the respective closed space (7, 31).

5. A brake (50) according to one of claims 1 to 4, **characterized in that** the line-shaped region is a lip.

6. A brake according to one of claims 1 to 5, **characterized in that** at least one of the sealing plates (57, 58) is made of a polymeric material.

7. A brake according to one of claims 1 to 6, **characterized in that** the actuating member (55) is made of spring steel.

8. A brake (50) according to one of claims 1 to 7, **characterized in that** the actuating member (55) is ring-shaped and essentially surrounds a passage (51) for a shaft.

9. A brake (50) according to claim 8, **characterized in that** the actuating member (55) is provided with incisions (75) extending from its periphery to its central region in order to increase its flexibility and adjusting its spring force.

10. A brake (55) according to claim 9, **characterized in that** the incisions (75) extend alternatingly from opposite regions of the periphery of the actuating element.

11. A brake (50) according to one of claims 1 to 10, **characterized in that** the frictional member (22) is essentially shaped as a lip a side of which being touched by a periphery of the actuating member (55), so that the frictional element may be pressed on the first member by bending or flattening the actuating element.

12. A brake (50) according to one of claims 1 to 11 in a rotating table in a tool machine for braking the shaft of the table.
